# NEUE EUROPÄISCHE PATENTSCHRIFT

(11) **EP 3 411 436 B2**
(45) Veröffentlichungstag und Bekanntmachung des Hinweises auf die Entscheidung über den Einspruch: **28.12.2022**
(45) Hinweis auf die Patenterteilung: 18.09.2019
(21) Anmeldenummer: 17703936.9
(22) Anmeldetag: 01.02.2017
(51) Int. Cl.: C08L 29/00, B65D 85/804, B65D 73/00

(54) **SAUERSTOFFDICHTER KUNSTSTOFF, VERFAHREN ZUR HERSTELLUNG, VERWENDUNG UND DARAUS HERGESTELLTES VERPACKUNGSMATERIAL**
FOODCONTAINER IMPERMEABLE TO OXYGEN, METHOD, USE AND PACKAGING MATERIAL
RÉCIPIENT POUR NOURRITURE IMPERMÉABLE À L'OXYGÈNE, MÉTHODE, USAGE ET EMBALLAGE

(30) Priorität: 01.02.2016 DE 102016201498
(43) Veröffentlichungstag der Anmeldung: 12.12.2018
(60) Teilanmeldung: 19197117.5
(73) Patentinhaber: Kuhl, Norbert, 83355 Erlstätt (DE); Wassmer, Martin, 1824 Caux (CH)
(72) Erfinder: Kuhl, Norbert, 83355 Erlstätt (DE); Wassmer, Martin, 1824 Caux (CH)
(74) Vertreter: Dilg, Haeusler, Schindelmann Patentanwaltsgesellschaft mbH
(86) Internationale Anmeldenummer: PCT/EP2017/052137
(87) Internationale Veröffentlichungsnummer: WO 2017/134096

(56) Entgegenhaltungen:
- EP-A1- 0 603 876
- EP-A1- 2 937 386
- WO-A1-2009/153275
- WO-A1-2012/124129
- WO-A1-2014/202694
- WO-A1-2015/158838
- WO-A2-2015/177591
- GB-A- 2 189 789
- JP-A- H05 125 266
- JP-A- H06 263 954
- JP-A- 2001 049 100
- JP-A- 2001 072 822
- US-A- 5 349 000

## Beschreibung

Die Erfindung betrifft einen Polymerblend nach Anspruch 1, ein Verfahren zur Herstellung eines Polymerblends nach Anspruch 6, die Verwendung eines Polymerblends zur Herstellung eines Verpackungsmaterials nach Anspruch 10 sowie ein Verpackungsmaterial nach Anspruch 14.

Das erfindungsgemäße Verpackungsmaterial kann insbesondere, aber nicht ausschließlich, für die Verpackung von Lebensmitteln geeignet sein und dabei insbesondere als Lebensmittelbehälter, zum Beispiel für die Aufnahme von flüssigen, pastösen, festen, pulverförmigen, insbesondere gemahlenen oder rieselfähigen Lebensmitteln vorgesehen sein, zum Beispiel als Teil einer Kunststoff-Kaffee- oder Teekapsel oder aber auch für die Aufnahme von Milchprodukten oder Brühgut, wie Kaffee, Tee, Instantgetränken oder Instantsuppen. Das erfindungsgemäße Verpackungsmaterial kann jedoch unter anderem auch als Verpackungsmaterial für pharmazeutische Produkte, medizinische Produkte, insbesondere sterile Medizinprodukte, bei dem es auch zur aseptischen Verpackung geeignet sein kann, oder für andere Produkte, bei denen eine geringe Gasdurchlässigkeit des Verpackungsmaterials gewünscht ist, wie zum Beispiel bei der Verpackung von Toner oder Tintenpatronen für Drucker oder Kopierer oder für luftempfindliche, elektrische oder elektronische Geräte und dergleichen vorgesehen sein.

Für die Verpackung von vielen Produkten ist es erforderlich, dass das Verpackungsmaterial eine niedrige Gasdurchlässigkeit, insbesondere eine niedrige Sauerstoffdurchlässigkeit, aufweist. Dies trifft zum Beispiel häufig bei der Verpackung von Lebensmitteln zu, auf die im Folgenden als beispielhaftes Einsatzgebiet ausführlich eingegangen wird, auch wenn das erfindungsgemäße Verpackungsmaterial hierauf nicht beschränkt sein soll, sondern, wie oben angemerkt, auch für diverse andere Produkte geeignet ist, bei denen eine geringe Gasdurchlässigkeit des Verpackungsmaterials gewünscht ist.

Kunststoffverpackungen sind in der Regel nicht diffusionsdicht bzw. nicht gasdicht, insbesondere nicht dicht gegenüber dem Eintritt von Sauerstoff, der mit der verpackten Ware in Wechselwirkung treten kann. Bei Verwendung von Kunststoffverpackungen, insbesondere als Lebensmittelbehälter für sauerstoff-empfindliche Lebensmittel, sind diese daher bevorzugt mit einer gasdichten, wasserfesten, aromadichten und ggf. lebensmittelechten Barriereschicht zu versehen, will man Qualitätseinbußen durch eine Einwirkung von Sauerstoff auf die darin aufgenommenen Waren (Lebensmittel) auf ein Minimum reduzieren oder gar verhindern. Darüber hinaus stellt eine solche Barriereschicht eine Aromadichtheit bereit, die dafür sorgt, dass die in der Kunststoffverpackung aufgenommenen Lebensmittel, auch nach längerer Zeit ihr Aroma nicht verlieren. Beispielsweise, jedoch nicht ausschließlich, ist bei der Verwendung der Kunststoffverpackung als Brühgutaufnahmeeinheit darüber hinaus eine Wasserdampfbarriere vorzusehen, damit wasserlösliche Stoffe eines solchen Lebensmittelbehälters oder seiner Deckelfolie oder der Barrierenschicht während der Lagerung und/oder eines Brühvorgangs nicht an- oder gar aufgelöst werden.

Aus WO 2014/067 507 A2 ist eine Kapsel zur Aufnahme eines Brühguts wie Kaffee, Tee oder dergleichen bekannt. Die Kapsel ist aus einem Kunststoff, insbesondere aus PBT oder einem Kunststoff der PBT-Familie ausgebildet. WO 2014/067 507 A2 schlägt als Gasbarriereschicht eine Oberflächenbeschichtung zum Erzielen einer Sauerstoffdichtheit vor und führt weiter aus, die Gasbarriereschicht im Plasmabedampfungsverfahren u.a. durch die Verwendung von Silicium aufzubringen. Ein solches Plasmabedampfungsverfahren arbeitet mit Siliciumoxiden, die in einem (Hoch-)Vakuum mittels eines elektrisch durch Hochspannung erzeugten Lichtbogens verdampft werden, wobei sich der Siliciumoxiddampf im Weiteren auf die in der Vakuumkammer befindlichen Gegenstände, u.a. auf die Kapseln, absetzt. In DE 10 2011 052 149 A1 wird für dieses Verfahren für die Beschichtung von Lebensmittelverpackungsbehältern weiter gefordert, dass hierfür Siliciumoxide SiOₓ verwendet werden sollen, bei denen x eine Zahl < 2, bevorzugt < 0,9, sein soll. Als weiteres Beschichtungsverfahren zum Erreichen einer Sauerstoffdichtheit schlägt DE 10 2011 052 149 A1 u.a. eine Plasmapolymerisation vor, bei der bevorzugt Organosilane verwendet werden sollen. Alle diese Verfahren haben den Nachteil, dass sie ein technisch aufwendiges Verfahren darstellen, das zudem sehr kostenintensiv ist. Darüber hinaus ist der Aufwand zum Erzielen einer geeigneten Sauerstoffdichtigkeit, beispielsweise zum Erzielen einer längeren Mindesthaltbarkeitszeit, verhältnismäßig hoch und daher meist unwirtschaftlich gegenüber sauerstoffdichten Verpackungsbeuteln, in denen die Kaffeekapseln zum Erreichen der geforderten Mindesthaltbarkeit zusätzlich verpackt werden können.

EP 0 603 876 A1 offenbart einen biologisch abbaubaren Verpackungswerkstoff, bestehend aus einer sauerstoffsperrenden Kernschicht aus Polyvinylalkohol, die auf beiden Seiten mit einer wasserdampfsperrenden Schicht aus Polyhydroxybutyrat, Polyhydroxyvalerat oder einem Copolymer hiervon versehen ist, wobei auf jeder dieser beiden wasserdampfsperrenden Schichten noch eine Schicht aus einem Cellulosederivat und/oder aus Papier angeordnet ist. Das bedeutet, dass die sauerstoffsperrende Kernschicht aus Polyvinylalkohol ist auf beiden Seiten mit einer wasserdampfsperrenden Schicht versehen ist, die wiederum mit einer Schicht aus einem Cellulosederivat und/oder aus Papier bedeckt sind. Es handelt sich also um einen fünflagigen Schichtaufbau mit einer sauerstoffsperrenden Kernschicht aus Polyvinylalkohol in der Mitte.

WO 2015/177591 A2 offenbart eine Aluminiumkapsel zur Zubereitung von Getränken, die insbesondere mit gemahlenem Kaffee gefüllt sein kann und einen Gehäusekörper sowie ein Verschlusselement aufweist. Bei dem Verschlusselement handelt es sich, um einen Laminatfilm, der eine Vielzahl an Schichten aufweist, insbesondere eine Sauerstoff-undurchlässige Barriereschicht, die aus PVOH hergestellt sein kann und die zwischen einer Schicht aus PLA und einem Trägermaterial aus Cellulose oder PLA angeordnet ist. Zwischen der Sauerstoffundurchlässigen Barriereschicht und der Schicht ist zudem eine Klebstoffschicht vorgesehen.

DE 689 07 387 T2 verbessert die Gasbarriere-Eigenschaft von Polybutylenterephthalat (PBT) durch Hinzumischen eines Olefin-Vinylalkohol-Copolymers, insbesondere durch Hinzumischen von EVOH, zum Erzeugen eines Verpackungsmaterials für Lebensmittel mit verbesserter Gasundurchlässigkeit. Sowohl PBT als auch EVOH sind bei der Verwendung als Lebensmittelverpackung nicht unumstritten.

Es besteht daher ein Bedarf an Materialien für eine Verpackung mit niedriger Gasdurchlässigkeit, aus denen ein Lebensmittelbehälter (oder zumindest ein Teil davon) selbst hergestellt werden kann, ohne dass eine separate Gasbarriereschicht aufgetragen werden müsste oder ein sonstiges aufwendiges Herstellungsverfahren erforderlich wäre. Insbesondere besteht ein Bedarf für ein Kunststoffmaterial, aus dem mittels kostengünstiger Verfahren, insbesondere Urform-Verfahren, wie Spritzgießen, Tiefziehen oder Recken beispielsweise ein (insbesondere einschichtiger) Lebensmittelbehälter mit niedriger Gasdurchlässigkeit im Wesentlichen unmittelbar hergestellt werden kann.

Die Aufgabe der vorliegenden Erfindung besteht darin, ein Kunststoffmaterial bereitzustellen, aus dem in einfacher und kostengünstiger Weise ein Verpackungsmaterial bzw. eine Verpackung mit niedriger Gasdurchlässigkeit hergestellt werden kann. In einer weiteren Ausgestaltung soll der Kunststoff bzw. die daraus gemachte Verpackung darüber hinaus biologisch abbaubar, insbesondere gemäß EN 13432 und/oder EN 14995 kompostierbar, sein.

Die Aufgabe wird durch einen Polymerblend nach Anspruch 1 und durch ein Verpackungsmaterial nach Anspruch 14 gelöst. Bevorzugte Ausführungsformen des Polymerblends sind in den von Anspruch 1 abhängigen Unteransprüchen angegeben. Bevorzugte Ausführungsformen des Verpackungsmaterials sind in den von Anspruch 14 abhängigen Unteransprüchen angegeben.

Die erfindungsgemäße Aufgabe wird ferner durch ein Verfahren zur Herstellung eines Polymerblends nach Anspruch 6 sowie durch die Verwendung eines Polymerblends zur Herstellung eines Verpackungsmaterials nach Anspruch 10 gelöst, wobei auch hier die von Anspruch 6 bzw.10 abhängigen Unteransprüche auf bevorzugte Ausführungsformen gerichtet sind.

Der erfindungsgemäße Polymerblend umfasst 15 bis 70 Gew.-% Polyvinylalkohol (PVOH) und 30 bis 85 Gew.-% eines weiteren Polymers.

Das erfindungsgemäße Verfahren zur Herstellung eines Polymerblends umfasst die folgenden Schritte: (a) Mischen von Polyvinylalkohol (PVOH) und eines weiteren Polymers, wobei das massenbezogene Mischungsverhältnis des weiteren Polymers zu PVOH im Bereich von 85:15 bis 30:70 liegt; (b) Aufschmelzen, Mischen und Kompaktieren der in Schritt (a) erhaltenen Mischung zum Erzielen einer homogenen Mischung. In einem weiteren Schritt (c) kann ein Extrudieren der in Schritt (b) erhaltenen homogenen Mischung erfolgen, wobei das Extrudat in einem weiteren Schritt (d) granuliert werden kann. Sowohl die bereits mit Schritt (b) enthaltene homogene Mischung kann direkt und unmittelbar einem Urformprozess zugeführt werden, genauso wie das im Schritt (c) erhaltene Extrudat oder das im Schritt (d) erzeugte Granulat einem Urformprozess zugeführt werden können, wie beispielsweise einem Spritzgießen, Tiefziehen oder Recken. Das erfindungsgemäße Verfahren ist insbesondere zur Herstellung eines erfindungsgemäßen Polymerblends geeignet.

Die vorliegende Erfindung betrifft ferner die Verwendung eines erfindungsgemäßen Polymerblends zur Herstellung eines Verpackungsmaterials mit niedriger Gasdurchlässigkeit, insbesondere zur Herstellung eines erfindungsgemäßen Verpackungsmaterials.

Das erfindungsgemäße Verpackungsmaterial ist zumindest teilweise aus einem erfindungsgemäßen Polymerblend hergestellt.

Im Folgenden werden nähere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform des erfindungsgemäßen Polymerblends beschrieben werden, mit jeder anderen beispielhaften Ausführungsform des erfindungsgemäßen Polymerblends sowie mit jeder beispielhaften Ausführungsform des erfindungsgemäßen Verfahrens, der erfindungsgemäßen Verwendung oder jeder beispielhaften Ausführungsform des erfindungsgemäßen Verpackungsmaterials kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Der Ausdruck "umfassen", wie er hier verwendet wird, schließt nicht nur die Bedeutung von "enthalten" oder "beinhalten" ein, sondern kann auch "bestehen aus" und "im Wesentlichen bestehen aus" bedeuten.

Der erfindungsgemäße Polymerblend umfasst mindestens zwei Komponenten. Eine der beiden Komponenten ist ein Polyvinylalkohol (PVOH), der auch als PVAL bezeichnet wird. Im Folgenden wird synonym zu dem Begriff "Polymer" auch die Bezeichnung "Kunststoff" verwendet.

Unter einem Polymerblend, was vielfach auch einfach nur als Polyblend bezeichnet wird, wird im Rahmen der vorliegenden Erfindung insbesondere eine Mischung von mindestens zwei (verschiedenen) Polymeren im festen Zustand verstanden, ohne dass zwischen den beiden Polymeren eine chemische Reaktion stattfindet bzw. stattgefunden hat. Bei einer solchen rein physikalischen Mischung entstehen zwischen den Makromolekülen der eingesetzten Kunststoffe keine chemischen Bindungen.

Beträgt der Gewichtsanteil von PVOH an dem Polymerblend mehr als 15%, so ist eine geeignete Zunahme der Sauerstoffdichtheit bei einem daraus gemachten Verpackungsmaterial erkennbar, die mit steigendem Gewichtsanteil zunimmt. Mit der Zunahme der Sauerstoffdichtheit ist es möglich, eine längere Mindesthaltbarkeit bei dem verpackten Produkt, zum Beispiel einem Lebensmittel, zu erreichen, was mit der Aufrechterhaltung der Qualität des verpackten Lebensmittels über einen längeren Zeitraum einhergeht. Mit Zunahme des Gewichtsanteils an PVOH lässt sich die Sauerstoffdichtheit weiter steigern, wobei je nach Verwendung der Nicht-PVOH-Komponente bei einem Gewichtsanteil von ca. 70% eine gewisse Sättigung hinsichtlich der Zunahme der Sauerstoffdichtheit erreicht ist. Der Polymerblend kann insbesondere 20 bis 65 Gew.-%, insbesondere 25 bis 60 Gew.-%, insbesondere 25 bis 50 Gew.-%, insbesondere 30 bis 50 Gew.-%, wie zum Beispiel ca. 35 bis 40 Gew.-%, PVOH umfassen.

Durch die Verwendung eines Polymerblends können die physikalischen Eigenschaften des erfindungsgemäßen Verpackungsmaterials besser beeinflusst bzw. gesteuert werden, als bei einem nur ein-materialigen, thermoplastischen Kunststoff als Ausgangsstoff für das Spritzgießen. Die unvermischte Verwendung von PVOH als weitere zusätzliche Kunststoff-Schicht würde zwar auch zu einem sauerstoffdichten Lebensmittbehälter führen, jedoch wäre eine solche PVOH-Schicht wasserlöslich und müsste durch eine Wasserdampfbarriere geschützt werden. Dies würde gegenüber der Erfindung einen enormen Zusatzaufwand bedeuten, den die Erfindung gerade vermeiden will. Zudem sind die mechanischen Eigenschaften einer solchen PVOH-Schicht, beispielsweise die Materialhärte, in vielen Anwendungsfällen nicht ausreichend.

Wie oben bereits ausgeführt, enthält der Polymerblend neben PVOH mindestens ein weiteres Polymer. Der Mengenanteil des weiteren Polymers (im Fall von mehr als einem weiteren Polymer, die Summe der Mengenanteile der weiteren Polymere) an dem Polymerblend beträgt 30 bis 85 Gew.-%, insbesondere 35 bis 80 Gew.-%, insbesondere 40 bis 75 Gew.-%, insbesondere 50 bis 75 Gew.-%, insbesondere 50 bis 70 Gew.-%, wie zum Beispiel ca. 60 bis 65 Gew.-%.

Das weitere Polymer des erfindungsgemäßen Polymerblends ist ein biologisch abbaubares Polymer, genauer ein gemäß EN 13432 und/oder EN 14995 kompostierbarer Kunststoff. Das weitere Polymer kann insbesondere ein Biopolymer sein, das aus nachwachsenden Rohstoffen hergestellt wurde. Der Einsatz eines biologisch abbaubaren Polymers als das weitere Polymer des erfindungsgemäßen Polymerblends ist insbesondere dann bevorzugt, wenn das aus dem erfindungsgemäßen Polymerblend gemachte Verpackungsmaterial kompostierbar sein soll, was wiederum insbesondere dann besonders von Vorteil ist, wenn das verpackte Produkt, wie zum Beispiel ein Lebensmittel, zusammen mit der Verpackung entsorgt werden soll. Zum Beispiel bei der Verwendung des Verpackungsmaterials als eine Kaffee- oder Teekapsel, kann in solch einem Fall die gebrauchte Kaffee- oder Teekapsel zusammen mit ihrem Inhalt (aufgebrühtes Kaffeepulver bzw. aufgebrühter Tee) im Biomüll bzw. auf dem (Industrie- oder Haus-) Kompost oder dergleichen entsorgt werden. Hierdurch kann es möglich sein, ökologisch begründete Vorbehalte mancher Verbraucher gegenüber solchen Produkten, wie Kaffee- oder Teekapsel, zu entkräften bzw. die Akzeptanz solcher Produkte zu erhöhen und somit neue Märkte hierfür zu erschließen.

Zu den erfindungsgemäßen biologisch abbaubaren Polymeren gehören aus Lignin, Cellulose oder Glukose hergestellte thermoplastische Kunststoffe. Des Weiteren können auch Kombinationen an biologisch abbaubaren Polymeren zum Einsatz kommen.

Mittels eines erfindungsgemäßen Polymerblends aus biologisch abbaubaren Polymeren und PVOH kann ein sauerstoffdichtes, biologisch abbaubares Verpackungsmaterial hergestellt werden, was neben der Verlängerung der Mindesthaltbarkeit somit auch zum Abbau von Müllbergen beiträgt. Die in dem erfindungsgemäßen Polymerblend eingesetzten biologisch abbaubaren Polymere sind dabei nach EN 13432 bzw. EN 14995 biologisch abbaubar, d.h. deren biologischer Abbau kann in industriellen Kompostieranlagen erfolgen. Dies hat den Vorteil, dass der Abbau unter den Bedingungen einer industriellen Kompostieranlage erfolgen kann, d.h. der biologische Abbau findet bei erhöhter Temperatur, erhöhter Luftfeuchtigkeit und bei einem definierten Sauerstoffgehalt binnen weniger Wochen statt.

In einer Ausführungsform ist der erfindungsgemäße Polymerblend erhältlich durch Vermischen von Polyvinylalkohol (PVOH) und eines weiteren Polymers in einem ersten Schritt, wobei in einem weiteren Schritt, der zumindest teilweise auch zeitlich parallel erfolgen kann, ein Aufschmelzen und Kompaktieren unter weiterem Mischen und unter Erhalt einer homogenen Mischung in der Schmelze erfolgt. Die homogene Mischung kann, insbesondere als Schmelze, direkt einem Urform-Vorgang, beispielsweise einem Spritzgießen, zugeführt werden. Ein Extrudat der homogenen Mischung kann einem Granulieren oder ebenfalls einem Urform-Prozess zugeführt werden, wie beispielsweise einem Spritzgießen, Tiefziehen oder Recken. Insbesondere kann das erfindungsgemäße Polymerblend durch ein erfindungsgemäßes Verfahren zur Herstellung eines Polymerblends, wie es nachstehend noch näher beschrieben wird, erhalten werden.

In einer Ausführungsform liegt der erfindungsgemäße Polymerblend als ein Granulat vor. Diese gut handhabbare Form des Polymerblends erleichtert die weitere Verarbeitung des Polymerblends, zum Beispiel zu einem Verpackungsmaterial, beispielsweise mittels Spritzgießen, Tiefziehen, Recken und dergleichen. Diese Ausführungsform erleichtert aber auch den Transport des Polymerblends vom Ort seiner Herstellung zum Ort seiner Weiterverarbeitung und erleichtert auch die Lagerung des Polymerblends.

Das erfindungsgemäße Verfahren zur Herstellung eines Polymerblends umfasst die folgenden Schritte: (a) Mischen von Polyvinylalkohol (PVOH) und eines weiteren Polymers, wobei das massenbezogene Mischungsverhältnis des weiteren Polymers zu PVOH im Bereich von 85:15 bis 30:70 liegt; (b) Aufschmelzen, (weiteres, fortwährendes) Mischen und Kompaktieren der in Schritt (a) erhaltenen Mischungzum Erzeugen einer homogenen Mischung. In einem weiteren Schritt kann die im Schritt (b) erhaltene homogene Mischung einem Extrudieren zugeführt werden, wobei das erhaltene Extrudat in einem weiteren Schritt (d) granuliert werden kann. Das erfindungsgemäße Verfahren ist insbesondere zur Herstellung eines erfindungsgemäßen Polymerblends geeignet.

In einer Ausführungsform kann das Mischen gemäß Schritt (a) und/oder das Aufschmelzen gemäß Schritt (b) beispielsweise in einer, ggf. modifizierten, Spritzgießmaschinenschnecke oder in einem Doppelschneckenextruder durchgeführt werden. Hierdurch kann eine intensivere Durchmischung unter Erhalt einer besonders homogenen Mischung der Polymerkomponenten erzielt werden, was zu einer gleichmäßig niedrigen Gasdurchlässigkeit des aus dem als Verfahrensprodukt erhaltenen Polymerblend gemachten Verpackungsmaterials führt.

Ohne an eine Theorie gebunden sein zu wollen, gehen die Erfinder der vorliegenden Erfindung davon aus, dass bei der Herstellung des Polymerblends sich im Wesentlichen keine chemischen Verbindungen zwischen den eingesetzten Polymeren ausbilden, sondern die Polymerketten der beiden verschiedenen Polymere sich derart ineinander und aneinander legen, dass der daraus entstehende Polymerblend eine niedrige Gasdurchlässigkeit, insbesondere eine verbesserte Sauerstoffdichtheit, aufweist.

Das Mischungsverhältnis des weiteren Polymers zu PVOH kann in einer Ausführungsform des erfindungsgemäßen Verfahrens insbesondere im Bereich von 80:20 bis 35:65, insbesondere im Bereich von 75:25 bis 40:60, insbesondere im Bereich von 75:25 bis 50:50, insbesondere im Bereich von 70:30 bis 50:50, insbesondere im Bereich von 65:35 bis 60:40 liegen.

Der erfindungsgemäße Polymerblend kann zur Herstellung eines Verpackungsmaterials mit niedriger Gasdurchlässigkeit verwendet werden, insbesondere zur Herstellung eines erfindungsgemäßen Verpackungsmaterials mit geringer Sauerstoffdurchlässigkeit. Insbesondere kann der erfindungsgemäße Polymerblend zur Herstellung eines Verpackungsmaterials mittels Spritzgießen, Tiefziehen und/oder Recken verwendet werden.

Im Rahmen der vorliegenden Erfindung kann unter dem Begriff "niedrige Gasdurchlässigkeit" insbesondere eine Gasdurchlässigkeit, insbesondere eine Sauerstoffdurchlässigkeit, im Bereich von 0,1 bis 1 x 10⁻⁴ cm³/m²/Tag, gemessen gemäß ISO 15105-2, verstanden werden. Die Messung kann insbesondere bei einem Luftdruck von 1 bar, d.h. einem Sauerstoffpartialdruck von ca. 0,21 bar und bei einer Dicke der Probe, deren Gasdurchlässigkeit gemessen wird, von 0,5 mm durchgeführt werden.

Der erfindungsgemäße Polymerblend kann somit zur Herstellung eines Verpackungsmaterials mit einer Gasdurchlässigkeit im Bereich von 0,1 bis 1 x 10⁻⁴ cm³/m²/Tag, insbesondere 0,15 bis 0,9 x 10⁻⁴ cm³/m²/Tag, insbesondere 0,2 bis 0,8 x 10⁻⁴ cm³/m²/Tag, gemessen gemäß ISO 15105-2, verwendet werden.

In einer weiteren Ausführungsform kann der erfindungsgemäße Polymerblend zur Herstellung eines biologisch abbaubaren Verpackungsmaterials verwendet werden, das vorzugsweise gemäß EN 13432 und/oder EN 14995 kompostierbar ist. Hierzu enthält der erfindungsgemäße Polymerblend neben PVOH als das weitere Polymer ein insbesondere biologisch abbaubares Polymer.

Das erfindungsgemäße Verpackungsmaterial ist zumindest teilweise aus einem erfindungsgemäßen Polymerblend gemacht. Es kann insbesondere zumindest ein Teil des erfindungsgemäßen Verpackungsmaterials aus einem erfindungsgemäßen Polymerblend gemacht sein, wie zum Beispiel zumindest ein Behälter und/oder ein Deckel, die als eine Verpackung dienen können. Es ist aber auch möglich, dass das erfindungsgemäße Verpackungsmaterial neben dem erfindungsgemäßen Polymerblend auch aus einer oder mehrerer weiterer Komponenten gemacht sein kann. In einer weiteren Ausführungsform ist das Verpackungsmaterial aber ausschließlich aus einem erfindungsgemäßen Polymerblend gemacht.

Das erfindungsgemäße Verpackungsmaterial kann insbesondere mittels Spritzgießen, Tiefziehen und/oder Recken aus dem Polymerblend hergestellt werden. In einer Ausführungsform ist das Verpackungsmaterial als ein Behälter oder ein anderer dreidimensionaler Formkörper zur Aufnahme bzw. Verpacken eines Guts ausgestaltet, der beispielsweise mittels Spritzgießen und/oder Tiefziehen aus dem erfindungsgemäßen Polymerblend hergestellt werden kann. In einer weiteren Ausführungsform kann das Verpackungsmaterial die Form einer Folie aufweisen, die zum Umwickeln, Einschweißen bzw. Verpacken eines Guts geeignet sein kann und die beispielsweise mittels Recken hergestellt werden kann.

Das erfindungsgemäße Verpackungsmaterial weist vorzugsweise eine niedrige Gasdurchlässigkeit auf. Insbesondere kann das erfindungsgemäße Verpackungsmaterial eine Gasdurchlässigkeit im Bereich von 0,1 bis 1 x 10⁻⁴ cm³/m²/Tag, insbesondere 0,15 bis 0,9 x 10⁻⁴ cm³/m²/Tag, insbesondere 0,2 bis 0,8 x 10⁻⁴ cm³/m²/Tag, gemessen gemäß ISO 15105-2, aufweisen.

In einer weiteren Ausführungsform kann das erfindungsgemäße Verpackungsmaterial biologisch abbaubar sein, insbesondere gemäß EN 13432 und/oder EN 14995 kompostierbar sein. Hierzu wird das erfindungsgemäße Verpackungsmaterial vorzugsweise aus einem erfindungsgemäßen Polymerblend hergestellt, das neben PVOH als das weitere Polymer ein biologisch abbaubares Polymer umfasst.

Das erfindungsgemäße Verpackungsmaterial kann beispielsweise ein Verpackungsmaterial für Lebensmittel sein. Insbesondere kann es als ein Lebensmittelbehälter ausgestaltet sein. Wie eingangs gesagt, kann das erfindungsgemäße Verpackungsmaterial aber auch ein Verpackungsmaterial für andere luftempfindliche Produkte sein, wie zum Beispiel pharmazeutische Produkte, medizinische Produkte, insbesondere sterile Medizinprodukte, bei dem es auch zur aseptischen Verpackung geeignet sein kann. Das erfindungsgemäße Verpackungsmaterial kann jedoch auch zur Verpackung luftempfindlicher Toner oder Tintenpatronen für Drucker oder Kopierer oder luftempfindliche elektrische oder elektronische Geräte und dergleichen verwendet werden.

Die vorliegende Erfindung wurde an Hand spezifischer Ausführungsformen und Beispiele beschrieben.

## Patentansprüche

1. Polymerblend zur Herstellung eines Verpackungsmaterials mit niedriger Gasdurchlässigkeit, **dadurch gekennzeichnet, dass** das Polymerblend Polyvinylalkohol (PVOH) sowie ein weiteres Polymer umfasst, wobei
- das massenbezogene Mischungsverhältnis des weiteren Polymers zu Polyvinylalkohol (PVOH) im Bereich von 85:15 bis 30:70 liegt, und
- das weitere Polymer ein gemäß EN 13432 und/oder EN 14995 kompostierbarer, thermoplastischer Kunststoff ist, der aus Glukose, Lignin oder Cellulose hergestellt ist.

2. Polymerblend nach Anspruch 1, erhältlich durch Vermischen, Aufschmelzen und Kompaktieren von Polyvinylalkohol (PVOH) und des weiteren Polymers unter Erhalt einer homogenen Mischung in der Schmelze.

3. Polymerblend nach Anspruch 2, wobei die homogene Mischung mittels eines Extruders oder einer Spritzgießmaschinenschnecke erzeugbar ist.

4. Polymerblend nach Anspruch 2 oder 3, wobei die homogene Mischung anschließend granuliert oder einem Urformprozess zuführbar ist.

5. Polymerblend nach einem der Ansprüche 1 bis 4, wobei der Polymerblend als ein Granulat vorliegt.

6. Verfahren zur Herstellung eines Polymerblends, insbesondere eines Polymerblends nach einem der Ansprüche 1 bis 5, wobei das Verfahren die folgenden Schritte umfasst:
(a) Mischen von Polyvinylalkohol (PVOH) und eines weiteren Polymers, das ein gemäß EN 13432 und/oder EN 14995 kompostierbarer, thermoplastischer Kunststoff ist, der aus Glukose, Lignin oder Cellulose hergestellt ist, wobei das massenbezogene Mischungsverhältnis des weiteren Polymers zu PVOH im Bereich von 85:15 bis 30:70 liegt,
(b) Aufschmelzen, Mischen und Kompaktieren der in Schritt (a) erhaltenen Mischung zum Erhalt einer homogenen Mischung.

7. Verfahren nach Anspruch 6, ferner umfassend:
(c) Extrudieren der in Schritt (b) erhaltenen homogenen Mischung.

8. Verfahren nach Anspruch 7, ferner umfassend:
(d) Granulieren des in Schritt (c) erhaltenen Extrudats.

9. Verfahren nach einem der Ansprüche 6 bis 8 ferner umfassend:
(e) Urformen der homogenen Mischung, des Extrudats oder des Granulats.

10. Verwendung eines Polymerblends nach einem der Ansprüche 1 bis 5 zur Herstellung eines Verpackungsmaterials mit niedriger Gasdurchlässigkeit.

11. Verwendung nach Anspruch 10 zur Herstellung eines Verpackungsmaterials mittels Spritzgießen, Tiefziehen und/oder Recken.

12. Verwendung nach Anspruch 10 oder 11, wobei die Gasdurchlässigkeit 0,1 bis 1 × 10⁻⁴ cm³/m²/Tag, insbesondere 0,15 bis 0,9 × 10⁻⁴ cm³/m²/Tag, gemessen gemäß ISO 15105-2, beträgt.

13. Verwendung nach einem der Ansprüche 10 bis 12, wobei das Verpackungsmaterial biologisch abbaubar, insbesondere gemäß EN 13432 und/oder EN 14995 kompostierbar, ist.

14. Verpackungsmaterial, das zumindest teilweise aus einem Polymerblend nach einem der Ansprüche 1 bis 5 hergestellt ist.

15. Verpackungsmaterial nach Anspruch 14, hergestellt mittels Urformen, insbesondere durch Spritzgießen, Tiefziehen und/oder Recken.

16. Verpackungsmaterial nach Anspruch 14 oder 15, wobei das Verpackungsmaterial biologisch abbaubar, insbesondere gemäß EN 13432 und/oder EN 14995 kompostierbar ist.

17. Verpackungsmaterial nach einem der Ansprüche 14 bis 16, wobei das Verpackungsmaterial eine Gasdurchlässigkeit, insbesondere eine Sauerstoffdurchlässigkeit, von 0,1 bis 1 × 10⁻⁴ cm³/m²/Tag, insbesondere von 0,15 bis 0,9 × 10⁻⁴ cm³/m²/Tag, gemessen gemäß ISO 15105-2, aufweist.

18. Verpackungsmaterial nach einem der Ansprüche 14 bis 17, wobei das Verpackungsmaterial ein Verpackungsmaterial für Lebensmittel ist, insbesondere ausgestaltet als ein Lebensmittelbehälter.

## Claims

1. Polymer blend for producing a packaging material with low gas permeability,
**characterized in that**
the polymer blend comprises polyvinyl alcohol (PVOH) as well as a further polymer, wherein
- the mass-related mixing ratio of the further polymer to PVOH lies in the range from 85:15 to 30:70, and
- the further polymer is a thermoplastic made from glucose, lignin or cellulose and compostable according to EN 13432 and/or EN 14995.

2. Polymer blend according to claim 1, obtainable by mixing, fusing, and compacting polyvinyl alcohol (PVOH) and the further polymer, resulting in a homogenous mixture in the melt.

3. Polymer blend according to claim 2, wherein the homogenous mixture can be produced by means of an extruder or an injection molding machine screw.

4. Polymer blend according to claim 2 or 3, wherein the homogenous mixture can subsequently be subjected to granulation or a primary shaping process.

5. Polymer blend according to one of the claims 1 to 4, wherein the polymer blend is present as a granulate material.

6. Method for producing a polymer blend, particularly a polymer blend according to one of the claims 1 to 5, wherein the method comprises the following steps:
(a) Mixing of polyvinyl alcohol (PVOH) and a further polymer which is a thermoplastic made from glucose, lignin or cellulose and compostable according to EN 13432 and/or EN 14995, wherein the mass-related mixing ratio of the further polymer to PVOH lies in the range from 85:15 to 30:70;
(b) fusing, mixing, and compacting of the mixture obtained in step (a) for achieving a homogenous mixture.

7. Method according to claim 6, further comprising:
(c) Extruding the homogenous mixture obtained in step (b).

8. Method according to claim 7, further comprising:
(d) Granulating the extrudate obtained in step (c).

9. Method according to one of the claims 6 to 8, further comprising:
(e) Primary shaping of the homogenous mixture, the extrudate, or the granulate material.

10. Use of a polymer blend according to one of the claims 1 to 5 for producing a packaging material with low gas permeability.

11. Use according to claim 10 for producing a packaging material by means of injection molding, deep-drawing and/or stretching.

12. Use according to claim 10 or 11, wherein the gas permeability is 0.1 to 1 × 10⁻⁴ cm³/m²/day, particularly 0.15 to 0.9 × 10⁻⁴ cm³/m²/day, measured according to ISO 15105-2.

13. Use according to one of the claims 10 to 12, wherein the packaging material is biodegradable, particularly compostable according to EN 13432 and/or EN 14995.

14. Packaging material that is produced at least to some extent from a polymer blend according to one of the claims 1 to 5.

15. Packaging material according to claim 14, produced by means of primary shaping, particularly by means of injection molding, deep-drawing and/or stretching.

16. Packaging material according to claim 14 or 15, wherein the packaging material is biodegradable, particularly compostable according to EN 13432 and/or EN 14995.

17. Packaging material according to one of the claims 14 to 16, wherein the packaging material has a gas permeability, particularly an oxygen permeability, from 0.1 to 1 × 10⁻⁴ cm³/m²/day, particularly from 0.15 to 0.9 × 10⁻⁴ cm³/m²/day, measured according to ISO 15105-2.

18. Packaging material according to one of the claims 14 to 17, wherein the packaging material is a packaging material for food, particularly designed as a food container.

## Revendications

1. Mélange de polymères destiné à la fabrication d'un matériau d'emballage à faible perméabilité aux gaz,
**caractérisé en ce que**
le mélange de polymères comprend un alcool polyvinylique (PVOH) et un autre polymère, dans lequel
- le rapport de mélange en poids entre l'autre polymère et l'alcool polyvinylique (PVOH) est compris entre 85:15 et 30:70 et
- l'autre polymère est un thermoplastique fabriqué à partir du glucose, de la lignine ou de la cellulose et compostable tel que défini dans les normes EN 13432 et/ou EN 14995.

2. Mélange de polymères selon la revendication 1, pouvant être obtenu par mélange, fusion et compactage d'alcool polyvinylique (PVOH) et de l'autre polymère jusqu'à obtention d'un mélange homogène à l'état fondu.

3. Mélange de polymères selon la revendication 2, dans lequel le mélange homogène peut être produit au moyen d'une extrudeuse ou d'une vis sans fin d'une presse à injecter.

4. Mélange de polymères selon la revendication 2 ou 3, dans lequel le mélange homogène est ensuite granulé ou peut être amené à un procédé de formage initial.

5. Mélange de polymères selon l'une quelconque des revendications 1 à 4, dans lequel le mélange de polymères est disponible sous forme de granulés.

6. Procédé de fabrication d'un mélange de polymères, en particulier d'un mélange de polymères selon l'une quelconque des revendications 1 à 5, lequel procédé comprend les étapes suivantes :
(a) Mélange d'alcool polyvinylique (PVOH) et d'un autre polymère étant un thermoplastique fabriqué à partir du glucose, de la lignine ou de la cellulose et compostable tel que défini dans les normes EN 13432 et/ou EN 14995, dans lequel le rapport de mélange en poids entre l'autre polymère et le PVOH est compris entre 85:15 et 30:70;
(b) Fusion, brassage et compactage du mélange obtenu à l'étape (a) jusqu'à obtention d'un mélange homogène.

7. Procédé selon la revendication 6, comprenant en outre :
(c) Extrusion du mélange homogène obtenu à l'étape (b).

8. Procédé selon la revendication 7, comprenant en outre :
(d) Granulation de l'extrudat obtenu à l'étape (c).

9. Procédé selon l'une quelconque des revendications 6 à 8, comprenant en outre :
(e) Formage primaire du mélange homogène, de l'extrudat ou des granulés.

10. Utilisation d'un mélange de polymères selon l'une quelconque des revendications 1 à 5 en vue de la fabrication d'un matériau d'emballage à faible perméabilité aux gaz.

11. Utilisation selon la revendication 10 en vue de la fabrication d'un matériau d'emballage par moulage par injection, emboutissage et/ou étirage.

12. Utilisation selon la revendication 10 ou 11, où la perméabilité aux gaz est de 0,1 à 1 × 10⁻⁴ cm³/m²/jour, en particulier de 0,15 à 0,9 × 10⁻⁴ cm³/m²/jour, mesurée en vertu de la norme ISO 15105-2.

13. Utilisation selon l'une quelconque des revendications 10 à 12, où le matériau d'emballage est biodégradable, notamment compostable selon les normes EN 13432 et/ou EN 14995.

14. Matériau d'emballage constitué à tout le moins en partie d'un mélange de polymères selon l'une quelconque des revendications 1 à 5.

15. Matériau d'emballage selon la revendication 14, fabriqué par formage primaire, notamment par moulage par injection, emboutissage et/ou étirage.

16. Matériau d'emballage selon l'une quelconque des revendications 14 ou 15, le matériau d'emballage étant biodégradable, notamment compostable selon les normes EN 13432 et/ou EN 14995.

17. Matériau d'emballage selon l'une quelconque des revendications 14 à 16, ledit matériau d'emballage ayant une perméabilité aux gaz, notamment à l'oxygène, de 0,1 à 1 × 10⁻⁴ cm³/m²/jour, en particulier de 0,15 à 0,9 × 10⁻⁴ cm³/m²/jour, mesurée en vertu de la norme ISO 15105-2.

18. Matériau d'emballage selon l'une quelconque des revendications 14 à 17, ledit matériau étant un matériau d'emballage pour denrées alimentaires conçu notamment pour servir de contenant alimentaire.
